(19) Europäisches Patentamt
European Patent Office
Office européen des brevets

(11) Veröffentlichungsnummer: **0 093 367**
**B1**

(12) # EUROPÄISCHE PATENTSCHRIFT

(45) Veröffentlichungstag der Patentschrift: **13.09.89**

(21) Anmeldenummer: **83104021.7**

(22) Anmeldetag: **25.04.83**

(51) Int. Cl.[4]: **C 09 B 1/02,** C 09 B 1/16, C 09 B 1/50, C 09 B 1/54, C 09 B 1/58, C 09 K 19/00

(54) **Anthrachinonfarbstoffe, ihre Herstellung und Verwendung sowie dichroitisches Material enthaltend diese Anthrachinonfarbstoffe.**

(30) Priorität: **03.05.82 DE 3216455**

(43) Veröffentlichungstag der Anmeldung: **09.11.83 Patentblatt 83/45**

(45) Bekanntmachung des Hinweises auf die Patenterteilung: **13.09.89 Patentblatt 89/37**

(84) Benannte Vertragsstaaten: **CH DE FR GB LI NL**

(73) Patentinhaber: **BAYER AG, D-5090 Leverkusen 1 Bayerwerk (DE)**

(72) Erfinder: **Blunck, Martin, Dr., Steegerstrasse 7, D-5000 Köln 80 (DE)**
Erfinder: **Claussen, Uwe, Dr., Carl- Rumpff-Strasse 29, D-5090 Leverkusen (DE)**
Erfinder: **Kröck, Friedrich Wilhelm, Dr., Ackerstrasse 45, D-5068 Odenthal (DE)**
Erfinder: **Neeff, Rütger, Dr., Berta- von- Suttner-Strasse 22, D-5090 Leverkusen (DE)**

(56) Entgegenhaltungen:
**EP-A-0 026 004**
**EP-A-0 038 460**
**EP-A-0 048 887**
**EP-A-0 049 036**
**EP-A-0 054 217**
**EP-A-0 059 036**
**EP-A-0 075 173**
**CH-A-9 923**
**CH-A-481 173**
**DE-A-1 939 095**
**DE-A-2 106 617**
**DE-A-2 122 232**
**DE-A-2 531 557**
**DE-A-3 247 896**
**FR-A-1 439 370**
**FR-A-1 442 472**
**FR-A-1 571 801**
**FR-A-2 195 658**

(56) Entgegenhaltungen: (Fortsetzung)
**FR-A-2 214 010**
**FR-A-2 291 255**
**FR-A-2 439 842**
**FR-A-2 444 702**
**GB-A-2 091 283**

**Die Akte enthält technische Angaben, die nach dem Eingang der Anmeldung eingereicht wurden und die nicht in dieser Patentschrift enthalten sind.**

EP 0 093 367 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft flüssigkristallines Material enthaltend Anthrachinonfarbstoffe. Aus der DE-A-2 029 427 und der EP-A-0 049 036 ist die Verwendung von 1,8-Diamino-4,5-dihydroxyanthrachinonen, die in 2,7- bzw. 3,6-Stellung substituiert sind, in flüssigkristallinem Material bekannt. Die EP-A-0 054 217 beschreibt die Verwendung von in 2,6-Stellung durch (substituierte) Phenoxyreste substituierten 1,4,5,8-Tetraaminoanthrachinonen in flüssigkristallinen Materialien.

Die Erfindung betrifft flüssigkristallines Material enthaltend einen Farbstoff der Formel:

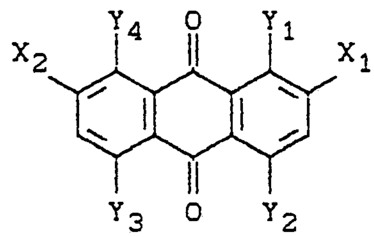

I

in der

$Y_1$, $Y_2$, $Y_3$, $Y_4$ Amino, Alkylamino, Arylamino, Cycloalkylamino, Aralkylamino bezeichnen, wobei die Kohlenwasserstoffreste substituiert sein können, und

$X_1$, $X_2$ Halogen, einen gegebenenfalls substituierten heterocyclischen Rest, $-SR_1$ oder $-OR_1$ bezeichnen, wobei

$R_1$ für gegebenenfalls substituiertes Alkyl, wobei die Alkylkette durch ein O-Atom oder mehrere nicht nachbarständige O-Atome unterbrochen sein kann, gegebenenfalls substituiertes Aryl, gegebenenfalls substituiertes Cycloalkyl, gegebenenfalls substituiertes Aralkyl oder einen gegebenenfalls substituierten heterocyclischen Rest steht.

Bevorzugte Farbstoffe entsprechen der Formel:

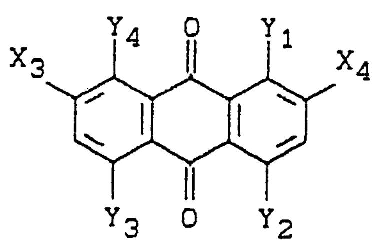

II

in der

$X_3$, $X_4$ Halogen, einen gegebenenfalls substituierten heterocyclischen Rest, $-OR_2$ oder $-SR_2$ bezeichnen, wobei

$R_2$ gegebenenfalls substituiertes Aryl oder einen gegebenenfalls substituierten heterocyclischen Rest bezeichnet.

Eine besonders bevorzugte Gruppe von Farbstoffen entspricht der Formel:

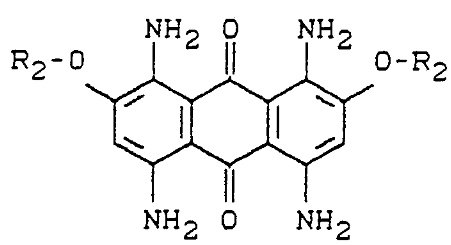

III

in der

$R_2$ die zu Formel II angegebene Bedeutung hat.

Weiterhin bevorzugt sind Farbstoffe der Formel:

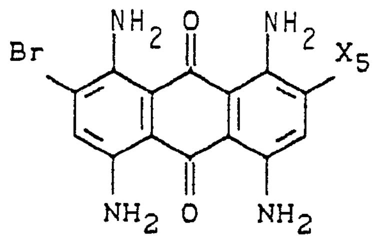

IV

in der

$X_5$ $-OR_1$ oder $-SR_1$ mit der zu Formel I gegebenen Bedeutung für $R_1$ bezeichnet.

Besonders bevorzugt sind Farbstoffe der Formeln:

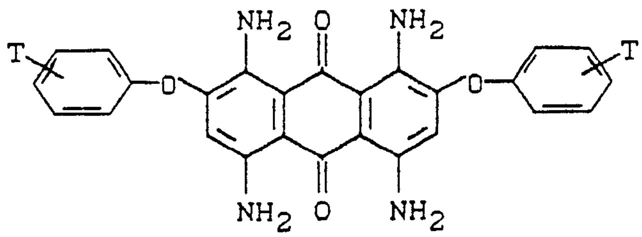

V

und

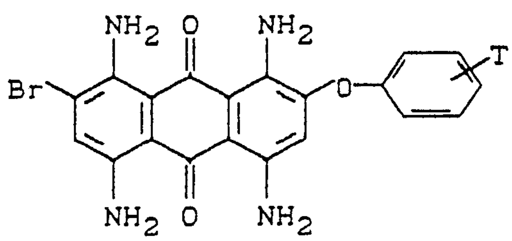

VI

In den Formeln V und VI bezeichnet

T Wasserstoff oder Alkyl, wobei die Alkylkette durch 1 - 3 nicht nachbarständige O-Atome unterbrochen sein kann, vorzugsweise $C_1$-$C_6$-Alkyl, Alkoxy, wobei die C-Kette des Alkoxyrestes durch 1 - 3 nicht nachbarständige O-Atome unterbrochen sein kann, vorzugsweise $C_1$-$C_6$-Alkoxy, Halogen, vorzugsweise Chlor, Brom und insbesondere Fluor, $-CF_3$, -CN, Alkylthio, insbesondere $C_1$-$C_6$-Alkylthio, Arylthio, insbesondere Phenylthio, Aryl, insbesondere Phenyl, $COOR_1$, insbesondere ($C_1$-$C_8$-Alkoxy)-carbonyl, Cyclohexyloxycarbonyl, Phenoxycarbonyl, Benzyloxycarbonyl,

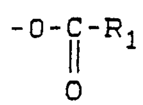,

insbesondere ($C_1$-$C_8$-Alkyl)-carbonyloxy, Cyclohexylcarbonyloxy, wobei

$R_1$ die zu Formel I angegebene Bedeutung hat.

Von besonderem Interesse sind Verbindungen der Formeln V und VI, bei denen T in meta-Stellung steht. Weiterhin bevorzugt sind Verbindungen der Formeln:

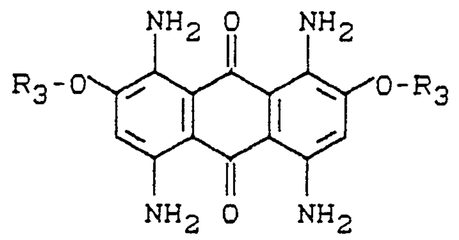

VII

bei denen $R_3$ gegebenenfalls substituiertes Alkyl, gegebenenfalls substituiertes Cycloalkyl oder gegebenenfalls substituiertes Aralkyl bezeichnet.

Besonders bevorzugt befinden sich in den Stellungen 2,7 ein oder zwei Substituenten der Formel:

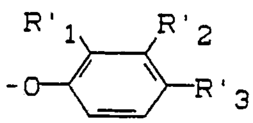

in der $R'_1$, $R'_2$ und $R'_3$ vorzugsweise folgende Bedeutungen haben:

$R'_1$: H, $C_1$-$C_8$-Alkyl, vorzugsweise Methyl, $C_1$-$C_8$-Alkoxy, vorzugsweise Methoxy und Ethoxy, F, Cl;

$R'_2$; H, $C_1$-$C_8$-Alkyl, vorzugsweise Methyl, $C_1$-$C_8$-Alkoxy, vorzugsweise Methoxy und Ethoxy, Phenyl, F, Cl, CN, $-CH_2CH_2CN$, ($C_1$-$C_8$-Alkoxy)-carbonyl, $C_1$-$C_8$-Alkylthio, insbesondere Methylthio und Ethylthio;

$R'_3$; H, $C_1$-$C_8$-Alkyl, wobei die Alkylkette durch nicht nachbarständige O-Atome unterbrochen sein kann, vorzugsweise Methyl, $C_1$-$C_8$-Alkoxy, vorzugsweise Methoxy und Ethoxy, Phenyl, F, Cl, CN, $-CH_2CH_2CN$, ($C_1$-$C_8$-Alkoxy)-carbonyl, vorzugsweise Pentyloxycarbonyl, $C_1$-$C_8$-Alkylthio, insbesondere Methylthio und Ethylthio.

Für die im bisherigen Text aufgeführten allgemeinen Substituentendefinitionen gelten die folgenden Vorzugsbereiche:

Halogen - Chlor, Brom, Fluor; Alkylamino - $C_1$-$C_6$-Alkylamino, insbesondere Methyl- und Ethylamino; Arylamino -Phenyl- und Naphtylamino; Cycloalkylamino -$C_3$-$C_7$-Cyclo-alkylamino, insbesondere Cyclopentyl- und Cyclohexylamino; Aralkylamino - Phenyl-$C_1$-$C_4$-alkylamino und Naphthyl-$C_1$-$C_4$-alkylamino, insbesondere Benzyl- und Phenethylamino; Alkylthio - $C_1$-$C_6$-Alkylthio, insbesondere Methyl- und Ethylthio; Arylthio - Phenylthio und Naphthylthio; Cycloalkylthio - $C_3$-$C_7$-Cycloalkylthio, insbesondere Cyclopentyl- und Cyclohexylthio; Aralkylthio - Phenyl-$C_1$-$C_4$-alkylthio und Naphthyl-$C_1$-$C_4$-alkylthio, insbesondere Benzyl- und Phenethylthio; Alkyl - $C_1$-$C_6$-Alkyl, wobei die Alkylkette durch nicht nachbarständige O-Atome unterbrochen sein kann, insbesondere Methyl und Ethyl; Aryl - Phenyl und Naphthyl; Cycloalkyl - $C_3$-$C_7$- Cycloalkyl, insbesondere Cyclopentyl und Cyclohexyl; Aralkyl - Phenyl-$C_1$-$C_4$-Alkyl und Naphthyl-$C_1$-$C_4$-alkyl, inbesondere Benzyl und Phenethyl, Alkoxy - $C_1$-$C_6$- Alkoxy, wobei die C-Kette des Alkoxyrestes durch 1 - 3 nicht nachbarständige O-Atome unterbrochen sein kann, insbesondere Methoxy und Ethoxy; gegebenenfalls substituierter heterocyclischer Rest - Rest eines fünf- oder sechsgliedrigen Heterocyclus, der 1, 2 oder 3 Ringatome aus der Reihe N, O, S enthält und an den ein Benzolring ankondensiert sein kann.

Als Substituenten für Alkyl und Cycloalkyl eignen sich z. B. $C_1$-$C_4$-Alkoxy, $C_1$-$C_4$-Alkylthio, Hydroxy, Phenoxy, Phenyl, Halogen, vorzugsweise Fluor, Chlor oder Brom.

Als Substituenten für Aryl bzw. für den Arylteil in Aralkyl eignen sich z. B. Halogen, vorzugsweise Fluor, Chlor und Brom, $C_1$-$C_4$-Alkyl, $C_1$-$C_4$-Alkoxy, $C_1$-$C_4$-Alkylthio, $-NO_2$, -CN, $-CF_3$, $C_1$-$C_4$-Alkylamino, $C_1$-$C_4$-Dialkylamino. Als Substituenten für die heterocyclischen Reste eignen sich z. B. Halogen wie Fluor, Chlor und Brom, $C_1$-$C_4$-Alkyl, Phenyl, $C_1$-$C_4$-Alkoxy, $C_1$-$C_4$-Alkylthio.

Die vorstehend genannten Substituenten für Alkyl, Aryl, Cycloalkyl und Aralkyl kommen auch in Frage, wenn diese Reste Teil von zusammengesetzten Resten wie Alkylamino, Arylamino, Cycloalkylamino, Aralkylamino, Alkylthio, Arylthio, Cycoalkylthio, Aralkylthio sind.

Die Herstellung der neuen Antrachinonfarbstoffe erfolgt nach an sich bekannten Verfahren. So erhält man z. B. die Verbindungen des Typs VI durch eine Phenolatschmelze, gegebenenfalls auch in einem aprotisch dipolaren Lösungsmittel, von 1,8-Diamino-4,5-ditosylamino-2,7-dibrom-antrachinon unter milden Bedingungen, vorzugsweise bei 80 - 130° C und nachfolgende Abspaltung der Tosylreste in Schwefel- oder Phosphorsäure.

Farbstoffe der Formel V, insbesondere solche, bei denen T in meta-Stellung steht, werden entsprechend wie die Farbstoffe VI hergestellt, nur wird die Phenolatschmelze bis zum völligen Halogenaustausch, gegebenenfalls bei höherer Temperatur, durchgeführt. Die durch Phenolschmelze eingeführten Phenoxygruppen bei den Farbstoffen der Formeln V und VI lassen sich, gegebenenfalls auf der Stufe der Tosylamide, d. h. vor Abspaltung der Tosylreste, durch Behandlung mit Alkoholen und Alkali, z. B. Kaliumcarbonat, gegebenenfalls in einem protisch, polaren Medium, z. B. ε-Caprolactam gegen die entsprechenden Alkyoxygruppen austauschen.

Die Verbindungen fallen im allgemeinen in ungenügender Reinheit für ihre Verwendung in Flüssigkristallzusammensetzungen an, so daß zusätzliche Reinigungsmaßnahmen wie Umkristallisieren, Säulenchromatographie oder eine Flüssig-flüssig-Verteilung notwendig werden.

Die Flüssigkristallzusammensetzungen finden vorzugsweise in optoelektronischen Anzeigeelementen Verwendung.

Die erfindungsgemäß verwendeten Farbstoffe besitzen eine ausgezeichnete Lichtechtheit, einen hohen Ordnungsgrad und in überwiegendem Maße eine für die technische Verwendung ausreichend hohe Farbdichte in flüssigkristallinen Materialien. Die genannten Eigenschaften sind für die Eignung als Farbstoffe in optoelektronischen Anzeigeelementen, die nach dem guest-host-Prinzip arbeiten, von entscheidender Bedeutung (DE-OS-3 028 593).

Opto-elektronische Anzeigeelemente bestehen in der Regel aus 2 parallel (im Abstande von 5 - 50 μ) angeordneten Glasplatten. An deren Innenseiten werden Elektroden angebracht, zwischen denen das flüssigkristalline Material eingebettet wird. Die Funktionsfähigkeit einer optoelektronischen Anzeige beruht auf der orientierten Struktur der Flüssigkristalle, die sich durch das angelegte elektrische Feld verändern läßt.

Die orientierte Struktur der flüssigkristallinen Materialien kann sich geeigneten Farbstoffen mitteilen, so daß diese als "Gäste" an der Struktur teilnehmen.

Die erfindungsgemäßen flüssigkristallinen Materialien werden in guest-host-Anzeigen, deren Aufbau und Arbeitsweise bekannt ist (Heilmeyer et al., Mol. Crystals and Liquid Cryst. 8, 293 - 309 (1969), DE-OS-2 639 675, DE-OS-2 568 568), als Lösung in einer nematischen Flüssigkristallmischung verwendet. Das flüssigkristalline Material als Wirtsphase enthält wenigstens einen Farbstoff der Formel I und kann daneben weitere Farbstoffe enthalten. Diese können dichroitische Eigenschaften besitzen oder nicht. Die Lösung besteht aus etwa 0,01 bis etwa 0,1 bis etwa 30 Gew.-%, vorzugsweise etwa 0,1 bis etwa 10 Gew.-% Farbstoff (als Gast) und aus der Wirtsphase, die überwiegend aus nematischem flüssigkristallinem Material besteht und weitere Zusätze, beispielsweise zur cholesterischen Orientierung enthalten kann.

Das flüssigkristalline Material hat vorzugsweise positive dielektrische Anisotropie und kann in optoelektronischen Anzeigevorrichtungen eingesetzt werden.

Von den verschiedenen Ordnungszuständen flüssigkristalliner Matrialien sind die nematischen und cholesterinischen bevorzugt, entsprechend den Definitionen, wie sie beispielsweise bei R. Steinsträßer und L. Pohl, Angew. Chem. 85, 706 (1973) angegeben sind.

Im feldlosen Zustand kann man zwei Orientierungen des flüssigkristallinen Materials unterscheiden, die von der Eigenschaft der Phasengrenze und damit von der Vorbehandlung der Glasplatten abhängen. Je nachdem, ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann, 4. Aufl. (1976) Bd. XI, S. 657 ff). Von der Dipoleigenschaften der flüssigkristallinen Verbindungen ist die dielektrische Anisotropie abhängig. Sie ist positiv, wenn das elektrische Feld eine homöotrope Ausrichtung bewirkt, negativ, wenn sie homogen wird. Die Verwendung der erfindungsgemäßen Farbstoffe in flüssigkristallinen Materialien mit positiver dielektrischer Anisotropie ist bevorzugt. Als flüssigkristalline Materialen geeignet sind z. B. Gemische aus Alkyl-(cyano-biphenyl), Alkoxy(cyano-biphenyl), Alkyl-(cyano-terphenyl), Alkyl-(cyanophenylcyclohexan) (PCH), Alkylbiphenylcyclohexan (BCH), Azoxyverbindungen, Schiff'schen Basen, Benzoesäurephenylestern, Thiobenzoesäurephenylestern und Terpyrimidinen. Überlicherweise werden eutektische Mischungen der Flüssigkristalle eingesetzt, wobei die Mischungsverhältnisse sowie die Mischungspartner in weiten Grenzen schwanken können. Derartige Mischungen sind z. T. handelsüblich. Zur Herstellung einer Anzeige sind z. B. Flüssigkristallsysteme auf der Basis Alkyl-4-cyanobiphenyl, Alkyl-4-cyanophenylpyrimidin und Alkyl-4-cyano-phenyl-cyclohexan, z. B. Mischungen überwiegend aus 4'-n-Pentyl-4-cyanobiphenyl, 4'-n-Heptyl-4-cyanobiphenyl, 4'-n-Octyl-4-cyanobiphenyl und 4'-n-Pentyl-4-cyanoterphenyl und aus trans-4-Heptyl-(4-cyanophenyl)-cyclohexan, trans-4-Pentyl-(4-cyanophenyl)-cyclohexan, trans-4-Propyl-(4'-cyanobiphenyl)-cyclohexan bevorzugt.

Als Beispiele für käufliche und geeignete Flüssigkristallmischungen sind für eine positive DK-Anisotropie Produkte auf Cyanopyrimidin- und Cyanoester-Basis sowie Mischungen aus BCH, PCH und PCH-Ester und PCH, BCH, BCH-Ester und Terphenyl (z. B. "Ro-TN-402", "Ro-TN-103", "Merck 1221 TNC", "Merck 1291 TNC", "Merck 1691", "Merck 1840") zu nennen.

Neben den flüssigkristallinen Verbindungen und dem Farbstoff kann das flüssigkristalline Material weitere übliche Zusätze enthalten, z. B. optisch aktive Verbindungen, die eine nematische Phase in eine cholesterinische umwandeln können oder Substanzen zur Verminderung der Schwellenspannung usw.

Die Güte der guest-host-Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1,0 annimmt. Praktisch wird dieser Wert nicht erreicht, vielmehr sind die S-Werte $< 1,0$. Die in der Literatur angegebenen Werte sind wegen unterschiedlicher Meßtechniken nicht ohne weiteres vergleichbar. Die Definition des Ordnungsgrades und seine Bedeutung ist bei D. L. White und G. N. Taylor, J. Appl. Phys. (5) 1974, 4718 - 4723 oder beispielsweise in EP-OS-2 104 beschrieben.

Für die technische Verwendung sind Farbstoffe mit hohem Ordnungsgrad besonders wertvoll. Jedoch müssen eine Reihe weiterer Eigenschaften vorhanden sein. Die photochemische Stabilität muß sehr gut sein, der Farbton darf im Licht weder verschießen noch ausbleichen. Darüber hinaus wird eine gute chemische

Beständigkeit in dem komplex zusammengesetzten flüssigkristallinen Medium verlangt. Schließlich muß der Farbstoff eine hohe Farbdichte zeigen und darf auch bei anhaltend tiefen Temperaturen nicht kristallisieren.

Es ist offensichtlich, daß es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

Es bedeutet eine besondere Schwierigkeit, die Farbstoffe unter Erhalt der dichroitischen Echtheits- und Farb-Eigenschaften ausreichend löslich zu machen. Gerade zur Optimierung der Löslichkeit sind zahlreiche Versuche notwendig und es läßt sich diese Eigenschaft nur sehr unvollkommen voraussagen.

In der Literatur sind Antrachinone schon länger als dichroitische Farbstoffe bekannt, beispielsweise aus den Literaturstellen DE-OS-2 363 219, US-PS-3 864 022, US-PS-3 975 285, DE-OS-2 418 364, DE-OS-2 815 335, EP-A-1 260 04, EP-A-1 348 32. In der DE-OS-3 028 593 und der GB-A-2 071 685 werden Verbindungen aufgeführt, die durch Substitution in β-Stellung gekennzeichnet sind.

Die synthetische Zugänglichkeit der 2,6-Diaryl-substituierten Anthrachinone ist jedoch sehr begrenzt, so daß in dieser Substanzklasse eine Anpassung der Moleküle an die technische Erfordernisse nur sehr unvollkommen möglich ist.

Die literaturbekannten Verbindungen insgesamt erweisen sich als verbesserungsbedürftig in Bezug auf Ordnungsgrad, Farbdichte, Lichtbeständigkeit und/oder Farborte.

Die erfindungsgemäß eingesetzten Farbstoffe liefern blaue bis rote Nuancen von ausgezeichneter Lichtechtheit und Farbstärke. Sie sind darüber hinaus sehr gut in Mischungen zum Aufbau von Schwarznuancen einsetzbar.

Die erfindungsgemäß einsetzbaren Farbstoffe sind von besonderem Wert zum Aufbau von Schwarzmischungen für Flüssigkristallzusammensetzungen in Kombination mit Anthrachinon- und Azofarbstoffen. Für derartige Kombinationen geeignete Antrachinonfarbstoffe sind z. B. aus EP-OS-26 004, DE-OS-3 009 940, DE-OS-3 009 974, EP-OS-34 832, DE-OS-2 903 095, DE-OS-3 028 593, DE-OS-3 036 853 und DE-OS-3 038 372 bekannt.

**Beispiel 1**

a) Aus einer Mischung von 185 g m-Kresol und 15 g Kaliumcarbonat destilliert man im Wasserstrahlvakuum ca. 35 g m-Kresol ab, versetzt die Schmelze mit 20 g 1,5 Diamino-4,8-di-(4-tosylamino)-2,6-dibrom-anthrachinon und erhitzt unter Rühren so lange auf ca. 160°C, bis nach ca. 16 Std. kein Ausgangsmaterial mehr durch Dünnschichtchromatographie nachweisbar ist, verdünnt die Schmelze bei etwa 70 - 80°C mit 200 ccm Methanol, saugt die ausgefallenen Kristalle ab und wäscht mit Methanol und dann mit heißem Wasser aus. Nach dem Trocknen bei 60°C erhält man 18,2 g entsprechend 84 % d.Th. 1,5-Diamino-4,8-di-(4-tosylamino)-2,6-di-(3-methylphenoxy)-anthrachinon.

b) 10 g des in Beispiel 1a hergestellten Farbstoffes werden in 100 ccm 90-proz. Schwefelsäure eingetragen, wobei die Temperatur nicht über 10°C ansteigen darf und dann bei 10°C so lange gerührt, bis nach ca. 1 Std. das Ausgangsmaterial vollkommen gespalten ist. Die erhaltene Lösung wird auf 200 g Eis gegossen, der ausgefallene Farbstoff abgesaugt, mit wenig Wasser gewaschen und in 200 ccm 10-proz. Ammoniaklösung bei 90°C ausgerührt. Nach Absaugen, Neutralwaschen und Trocknen bei 60°C erhält man 5,9 g, entspr. 96 % d. Th., 1,4,5,8-Tetraamino-2,6-di-(3-methyl-phenoxy)-anthrachinon, das man durch Umkristallisieren z. B. aus Dimethylformamid reinigen kann.

Der Farbton des an Kieselgel absorbierten Farbstoffs ist ein Blau, dem nach der "Colour Index Hue Indication Chart" die Indicator Number 14 zuzuordnen ist.

c) In der nematischen Phase, bestehend aus einer Mischung von ca. 24 % trans-4-Heptyl-(4-cyanophenyl)-cyclohexan, 37 % trans-4-Pentyl-(4-cyanophenyl)-cyclohexan, 26 % trans-4-Propyl(4-cyanophenyl)-cyclohexan und 12 % trans-4-Pentyl(4'-cyano-bi-phenylyl)-cyclohexan, löst man 0,5 % des in Beispiel 1b hergestellten Farbstoffes. Man erhält eine blau eingefärbte Flüssigkristallmischung, in der der Farbstoff einen Ordnungsgrad S von 0,78 aufweist.

Ähnlich gute Ordnungsgrade findet man auch in anderen, z. B. den auf den Seiten 11 und 12 aufgeführten Flüssigkristallmischungen.

**Beispiel 2**

a) In 50 ccm-N-Methyl-pyrrolidon trägt man 41,6 g 3-Hydroxy-benzoesäure-n-pentylester, 5,2 g trockenes Kaliumcarbonat und 18,4 g 1,5-Diamino-4,8-di(4-tosylamino)-2,6-dibromanthrachinon ein und erhitzt das Gemisch unter Rühren so lange auf 120 - 130°C, bis das Ausgangsmaterial völlig umgesetzt ist. Man verdünnt dann bei ca. 70°C mit 50 ccm Methanol, läßt völlig abkühlen, saugt ab, wäscht mit Methanol und heißem Wasser und trocknet den Farbstoff bei 60°C. Man erhält 21,2 g, entspr. 85 % d. Th., 1,5-Diamino-4,8-di-(4-tosylamino)-2,6-di-(3-pentyl-oxycarbonyl-phenoxy)-anthrachinon.

Dieses Zwischenprodukt kann auch analog der in Beispiel 1a gegebenen Vorschrift ohne zusätzliches Lösungsmittel in überschüssigem 3-Hydroxy-benzoesäure-n-pentylester hergestellt werden,

b) 10 g des in Beispiel 2a hergestellten Farbstoffs werden in 100 ccm 90-proz. Schwefelsäure wie in Beispiel 1b gespalten. Nach Aufarbeitung wie zuvor erhält man 6,1 g, entspr. 88 %, 1,4,5,8-Tetramino-2,6-di-(3-pentyloxycarbonyl-phenoxy)-anthrachinon, das man durch Umkristallisation, zum Beispiel aus Chlorbenzol oder Dimethylformamid, reinigen kann. Der Farbton des an Kieselgel adsorbierten Farbstoffs ist ein Blau mit der Indicator Number 14 ("Colour Index Hue Indication Chart").

c) In der flüssigkristallinen Phase, bestehend aus 51 % 4'-n-Pentyl-4-cyano-biphenyl, 24 % 4'-n-Heptyl-4-cyano-biphenyl, 16 % 4'-n-Octyl-4-cyano-biphenyl und 8 % 4"-n-Pentyl-4-cyano-terphenyl, löst man 0,5 % des in Beispiel 2b beschriebenen Farbstoffs. Man erhält eine blau eingefärbte Flüssigkristallmischung, in der der Farbstoff einen Ordnungsgrad S von 0,79 aufweist.

Ähnliche gute Ordnungsgrade beobachtet man auch, wenn man die in Beispiel 1c verwendete Flüssigkristallmischung einsetzt oder wenn man andere, z. B. die auf S. 10 und 11 aufgeführten Flüssigkristallmischungen anwendet.

**Beispiel 3**

a) Aus einer Mischung von 160 g Phenol und 15 g trockenem Kaliumcarbonat destilliert man im Wasserstrahlvakuum ca. 30 g Phenol ab und versetzt den Destillationsrückstand bei etwa 120°C mit 20 g 1,8-Diamino-4,5-di-(4-tosylamino)-2,7-dibrom-anthrachinon. Das Gemisch wird so lange bei 160 - 170°C gerührt, bis das Ausgangsmaterial nach etwa 16 Std. völlig umgesetzt ist. Nach dem Abkühlen auf etwa 70°C verdünnt man mit 200 ccm Methanol, läßt völlig abkühlen, saugt ab und wäscht die Kristalle mit Methanol und dann mit heißem Wasser. Nach dem Trocknen bei 60°C erhält man 17,4 g, entspr. 84 % d. Th., 1,8-Diamino-4,5-di-(4-tosylamino)-2,7-diphenoxy-anthrachinon.

Dieses Zwischenprodukt kann auch analog der in Beispiel 2a angegebenen Vorschrift in einem Lösungsmittel, wie z. B. N-Methylpyrrolidon hergestellt werden.

b) 10 g des in Beispiel 3a hergestellten Farbstoffs werden in 100 ccm 90-proz. Schwefelsäure bei max. 10°C gelöst und dann so lange bei dieser Temperatur gerührt, bis nach etwa 1 Std. das Ausgangsmaterial vollkommen gespalten ist. Die erhaltene Reaktionslösung wird auf 200 g Eis gegossen, der ausgefallene Farbstoff abgesaugt, mit wenig Wasser gewaschen und in 200 ccm 10-proz. Ammoniaklösung bei 90°C ausgerührt. Nach Absaugen, Neutralwaschen und Trocknen bei 60°C erhält man 5,7 g 1,4,5,8-Tetraamino-2,7-diphenoxy-anthrachinon, entspr. 95 % d. Th., das man durch Umkristallisation z. B. aus Dimethylformamid reinigen kann, und das auf Kieselgel nach der Colour Index Hue Indication Chart ein Blau mit der Indicator Number 14 ist.

c) 7,5 g des in Beispiel 3a hergestellten Farbstoffs werden in 75 g 100-proz. Orthophosphorsäure eingetragen und das Gemisch so lange auf 130°C erhitzt, bis nach etwa 30 Minuten das Ausgangsmaterial völlig gespalten ist. Die abgekühlte Reaktionslösung wird in 175 ccm Wasser eingerührt, der ausgefallene Farbstoff abgesaugt, mit wenig Wasser gewaschen und feucht in ca. 175 ccm 2-proz. Ammoniaklösung eingerührt. Man rührt die Suspension 30 Minuten bei 90°C, saugt heiß ab, wäscht neutral, trocknet bei 60°C und erhält 5,4 g 1,4,5,8-Tetraamino-2,7-diphenoxy-anthrachinon, entspr. 90 % d. Th.; der Farbstoff, der mit dem in Beispiel 3b hergestellten identisch ist, kann zur weiteren Reinigung aus Dimethylformamid umkristallisiert werden.

d) In der in Beispiel 1c genannten nematischen Phase löst man 0,5 % des in den Beispielen 3b oder 3c hergestellten Farbstoffs. Der Farbstoff hat in der blau eingefärbten Flüssigkristallmischung einen Ordnungsgrad S von 0,78.

Ähnlich gute Ordnungsgrade findet man auch in anderen, z. B. den auf S. 10 und 11 aufgeführten Flüssigkristallmischungen.

**Beispiel 4**

a) Ein Gemisch aus 50 ccm N-Methyl-pyrrolidon, 7,5 g 1,8-Diamino-4,5-di-(4-tosylamino)-2,7-dibrom-anthrachinon, 11,2 g m-Fluor-phenol und 1,0 g trockenem Kaliumcarbonat erhitzt man so lange auf 140 - 150°C, bis nach etwa 15 Std. das Ausgangsmaterial völlig umgesetzt ist. Man verdünnt das Reaktionsgemisch bei 60 - 70°C mit einem Gemisch aus 75 ccm Methanol, 25 ccm Wasser und 1 ccm Eisessig, läßt völlig abkühlen, saugt ab, wäscht den Farbstoff mit Methanol und heißem Wasser, trocknet ihn bei 60°C und erhält 7,1 g 1,8-Diamino-4,5-di-(4-tosylamino)-2,6-di-(3-fluor-phenoxy)-anthrachinon, entspr. 87 % d.Th., das zur weiteren Reinigung einmal aus Dimethylformamid umkristallisiert wird.

Die Herstellung dieses Zwischenprodukts kann auch ohne Lösungsmittel in überschüssigem 3-Fluor-phenol analog der Vorschrift des Beispiels 1a erfolgen.

b) 5 g des in Beispiel 4a hergestellten Farbstoffs werden in 100 ccm 90-proz. Schwefelsäure bei max. 10°C eingetragen. Die Lösung wird bei Raumtemperatur so lange gerührt, bis nach etwa 1 Std. das Ausgangsmaterial restlos gespalten ist (Dünnschichtchromatogramm). Dann wird die erhaltene Lösung auf 200 g Eis ausgetragen und die Farbstoff-Suspension wie zuvor z. B. in Beispiel 4b beschrieben aufgearbeitet. Der trockene Farbstoff, 1,4,5,8-Tetraamino-2,7-di-(3-fluor-phenoxy)-anthrachinon, wiegt 2,7 g, entspr. einer

Ausbeute von 83 % d. Th. Der Farbstoff kann zur völligen Reinigung über eine Kieselgel-Säule chromatographiert werden. Die Farbnuance dieses Farbstoffs nach der Colour Index Hue Indication Chart ist ein Blau mit der Indicator Number 14.

c) Der in Beispiel 4b hergestellte Farbstoff besitzt in der in Beispiel 1c genannten Flüssigkristallmischung einen Ordnungsgrad S von 0,76.

Ähnlich gute Ordnungsgrade findet man auch in anderen, z. B. den auf S. 10 und 11 aufgeführten Flüssigkristallmischungen.

**Beispiele 5 bis 110**

Verwendet man in Beispiel 3a oder 4a anstelle von Phenol bzw. m-Fluorphenol andere substituierte Phenole, so erhält man nach Spaltung gemäß Beispiel 3b oder c oder 4b die analogen, in Tabelle 2 angegebenen Farbstoffe, die in der in Beispiel 1c angegebenen Flüssigkristallmischung die in der Tabelle angegebenen Ordnungsgrade S besitzen. Die Farbtöne der an Kieselgel adsobierten Farbstoffe entsprechen nach den Colour Index Hue Indication Chart einem Blau und der Indicator Number 14.

**Tabelle 1**

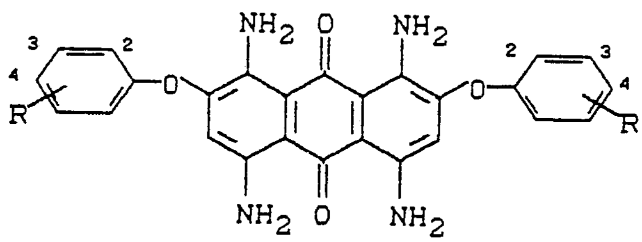

| Beispiel | R | S |
|---|---|---|
| 5 | 2-Cl | 0,77 |
| 6 | 3-Cl | 0,76 |
| 7 | 4-Cl | 0,78 |
| 8 | 4-F | 0,78 |
| 9 | 3-BR | 0,78 |
| 10 | $2-CH_3$ | 0,78 |
| 11 | $3-CH_3$ | 0,79 |
| 12 | $4-CH_3$ | 0,81 |
| 13 | $2-C_2H_5$ | 0,76 |
| 14 | $3-C_2H_5$ | 0,77 |
| 15 | $4-C_2H_5$ | 0,77 |
| 16 | $3-n-C_3-H_7$ | 0,77 |
| 17 | $4-n-C_3H_7$ | 0,77 |
| 18 | $3-i-C_3H_7$ | 0,78 |
| 19 | $3-n-C_4H_9$ | 0,76 |
| 20 | $4-t-C_4H_9$ | 0,79 |
| 21 | $3-n-C_5H_{11}$ | 0,77 |
| 22 | $4-n-C_5H_{11}$ | 0,77 |
| 23 | $3-n-C_7H_{15}$ | 0,75 |
| 24 | $4-n-C_7H_{15}$ | 0,75 |
| 25 | $3-n-C_8H_{17}$ | 0,75 |
| 26 | $4-n-C_9H_{19}$ | 0,74 |
| 27 | $2-OCH_3$ | 0,79 |
| 28 | $3-OCH_3$ | 0,80 |
| 29 | $4-OCH_3$ | 0,82 |
| 30 | $2-OC_2H_5$ | 0,76 |
| 31 | $3-OC_2H_5$ | 0,78 |
| 32 | $4-OC_2H_5$ | 0,80 |
| 33 | $3-O-n-C_3H_7$ | 0,79 |

| | | |
|---|---|---|
| 34 | 4-O-n-$C_3H_7$ | 0,79 |
| 35 | 3-O-i-$C_3H_7$ | 0,79 |
| 36 | 3-O-n-$C_4H_9$ | 0,78 |
| 37 | 3-O-t-$C_4H_9$ | 0,79 |
| 38 | 4-O-n-$C_4H_9$ | 0,78 |
| 39 | 4-O-t-$C_4H_9$ | 0,79 |
| 40 | 3-O-n-$C_5H_{11}$ | 0,78 |
| 41 | 4-O-n-$C_5H_{11}$ | 0,78 |
| 42 | 3-O-n-$C_6H_{13}$ | 0,77 |
| 43 | 3-O-n-$C_7H_{15}$ | 0,77 |
| 44 | 4-O-n-$C_7H_{15}$ | 0,76 |
| 45 | 3-O-n-$C_8H_{17}$ | 0,74 |
| 46 | 3-O-$C_9H_{19}$ | 0,73 |
| 47 | 4-O-n-$C_9H_{19}$ | 0,73 |
| 48 | 3-S-$CH_3$ | 0,78 |
| 49 | 4-S-$CH_3$ | 0,79 |
| 50 | 3-O-$CH_2$-$CH_2$-OH | 0,76 |
| 51 | 4-O-$CH_2$-$CH_2$-OH | 0,75 |
| 52 | 3- 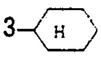 | 0,77 |
| 53 | 4- 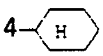 | 0,76 |
| 54 | 4- 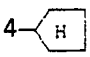 | 0,76 |
| 55 | 4- 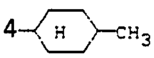 | 0,76 |
| 56 | 2- 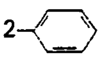 | 0,72 |
| 57 | 3- 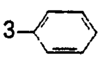 | 0,78 |
| 58 | 4- 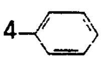 | 0,78 |
| 59 | 3-O-CO-$CH_3$ | 0,78 |
| 60 | 4-O-CO-$CH_3$ | 0,78 |
| 61 | 4-O-CO-$C_4H_9$ | 0,78 |
| 62 | 3-O-CO- 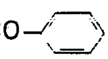 | 0,77 |
| 63 | 4-O-CO- 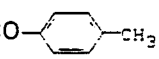 | 0,78 |
| 64 | 3-$COOCH_3$ | 0,78 |
| 65 | 4-$COOCH_3$ | 0,78 |
| 66 | 3-$COOC_2H_5$ | 0,78 |
| 67 | 4-$COOC_2H_5$ | 0,78 |
| 68 | 3-$COOC_3H_7$ | 0,77 |
| 69 | 4-$COOC_3H_7$ | 0,77 |
| 70 | 3-$COOC_4H_9$ | 0,76 |
| 71 | 4-$COOC_4H_9$ | 0,76 |
| 72 | 3-$COOC_5H_{11}$ | 0,77 |
| 73 | 4-$COOC_5H_{11}$ | 0,77 |
| 74 | 3-$COOC_6H_{13}$ | 0,75 |
| 75 | 4-$COOC_6H_{13}$ | 0,75 |
| 76 | 3-COO-$(CH_2)_2$-$OCH_3$ | 0,75 |
| 77 | 4-COO-$(CH_2)_2$-$OCH_3$ | 0,75 |
| 78 | 3-COO-$(CH_2)_2$-$OC_2H_5$ | 0,75 |
| 79 | 4-COO-$(CH_2)_2$-$OC_4H_9$ | 0,74 |
| 80 | 3-COO-$(CH_2)_3$-$OCH_3$ | 0,74 |
| 81 | 3-CONH-$(CH_2)_2$-$OCH_3$ | 0,73 |
| 82 | 3-CO-NH-$C_4$-$H_9$ | 0,73 |
| 83 | 4-CO-NH- 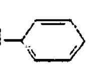 | 0,72 |
| 84 | 4-$SO_2$-O- 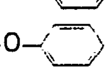 | 0,74 |

| | | |
|---|---|---|
| 85 | $4\text{-}SO_2\text{-}O\text{-}$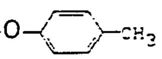 | 0,74 |
| 86 | $4\text{-}SO_2\text{-}O\text{-}$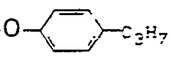 | 0,73 |
| 87 | $4\text{-}SO_2\text{-}O\text{-}$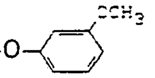 | 0,74 |
| 88 | $4\text{-}SO_2\text{-}$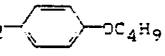 | 0,74 |
| 89 | $3\text{-}SO_2\text{-}O\text{-}$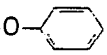 | 0,73 |
| 90 | $4\text{-}SO_2\text{-}N(CH_3)_2$ | 0,72 |
| 91 | $4\text{-}SO_2\text{-}NH\text{-}(CH_2)_3\text{-}OC_2H_5$ | 0,70 |
| 92 | $3\text{-}CH_2\text{-}$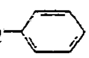 | 0,75 |
| 93 | $4\text{-}CH_2\text{-}$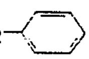 | 0,75 |
| 94 | 3-O-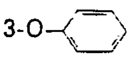 | 0,75 |
| 95 | 4-O-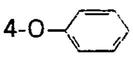 | 0,75 |
| 96 | $3\text{-}CF_3$ | 0,77 |
| 97 | $4\text{-}CF_3$ | 0,77 |
| 98 | 3-CN | 0,78 |
| 99 | $4\text{-}S\text{-}CO\text{-}CH_3$ | 0,76 |
| 100 | 3-O-CO-NH-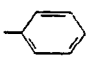 | 0,75 |
| 101 | $4\text{-}O\text{-}CO\text{-}NH\text{-}C_4H_9$ | 0,74 |
| 102 | $4\text{-}NH\text{-}CO\text{-}CH_3$ | 0,76 |
| 103 | $3\text{-}NH\text{-}CO\text{-}C_4H_9$ | 0,76 |

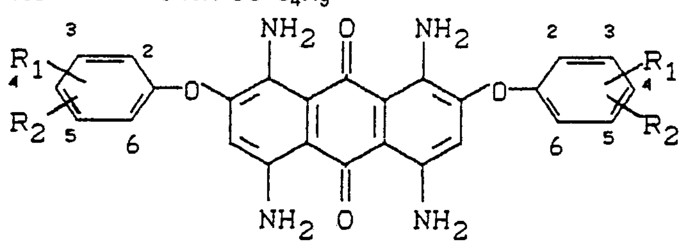

| | | | |
|---|---|---|---|
| 104 | 3-Cl | 4-Cl | 0.76 |
| 105 | 2-Cl | 5-Cl | 0.75 |
| 106 | $3\text{-}CH_3$ | $4\text{-}CH_3$ | 0,75 |
| 107 | 3-F | $4\text{-}CH_3$ | 0,74 |
| 108 | $2\text{-}CH_3$ | 5-Cl | 0,73 |
| 109 | $3\text{-}CH_3$ | 4-Cl | 0.73 |
| 110 | $3\text{-}(CH2)_4\text{-}4$ | | 0,70 |

**Beispiel 111**

a) 9,5 g 1,8-Diamino-4,5-di-(4-tosylamino)-2,7-di-phenoxy-anthrachinon, Herstellung s. Beispiel 3a, 22,6 g ε-Caprolactam, 15 g n-Butanol und 2,6 g trockenes Kaliumcarbonat erhitzt man unter Rühren so lange auf 140 bis 145°C, bis das eingesetzte Material völlig umgesetzt ist. Dabei leitet man einen schwachen Stickstoffstrom über das Reaktionsgemisch. Nach vollständiger Umsetzung verdünnt man das Reaktionsgemisch bei ca. 70°C mit 50 ccm Methanol, läßt völlig abkühlen, saugt ab und wäscht die Kristalle mit Methanol und heißem Wasser. Nach dem Trocknen erhält man 7,6 g 1,8-Diamino-4,5-di-(4-tosylamino)-2,7-di-n-butoxyanthrachinon, entspr. 84 % d. Th.

b) 5 g des in Beispiel 111a hergestellten Farbstoffs werden in 50 ccm 90-proz. Schwefelsäure so lange bei max. 10°C gerührt, bis nach ca. 1 Std. das Ausgangsmaterial völlig gespalten ist. Die Reaktionslösung wird auf 100 g Eis gegossen, der ausgefallene Farbstoff abgesaugt, mit Wasser gewaschen, mit 100 ccm 10-proz. Ammoniaklösung bei 90°C ausgerührt und abgesaugt. Dann wäscht man neutral, trocknet bei 60°C und erhält 2,5 g, entspr. 87 % d. Th., 1,4,5,8-Tetraamino-2,7-di-n-butoxy-anthrachinon, dessen Farbnuance auf Kieselgel

nach der Colour Index Hue Indication Chart ein Blau mit der Indicator Number 14 ist.

c) Der in Beispiel 111b hergestellte Farbstoff besitzt in der in Beispiel 1c genannten Flüssigkristallmischung einen Ordnungsgrad S von 0,75.

Ähnlich gute Ordnungsgrade findet man auch in anderen, z. B. den auf S. 10 und 11 aufgeführten Flüssigkristallmischungen.

**Beispiele 112 - 135**

Verwendet man in Beispiel 111a anstelle von n-Butanol andere (subst.) Alkohole, so erhält man nach Spaltung gemäß Beispiel 111b die analogen, in Tabelle 2 angegebenen Farbstoffe, die in der in Beispiel 1c angegebenen Flüssigkristallmischung die in der Tabelle angegebenen Ordnungsgrade S besitzen und deren Farbton auf Kieselgel nach der Colour Index Hue Indication Chart ein Blau zwischen den Indicator Numbers 14 und 15 ist.

**Tabelle 2**

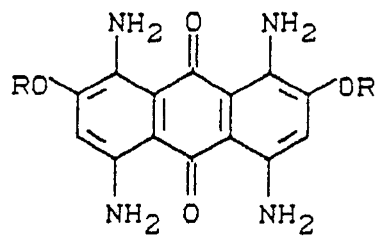

| Beispiel | R | S |
|---|---|---|
| 112 | $-n-C_3H_7$ | 0,74 |
| 113 | $-n-C_5H_{11}$ | 0,74 |
| 114 | $-n-C_6H_{13}$ | 0,73 |
| 115 | $-n-C_7H_{15}$ | 0,70 |
| 116 | $-(CH_2)_3-CN$ | 0,69 |
| 117 | $-(CH_2)_3-COOCH_3$ | 0,73 |
| 118 | $-(CH_2)_3-COOC_5H_{11}$ | 0,73 |
| 119 | $-(CH_2)_2-OCH_3$ | 0,71 |
| 120 | $-(CH_2)_2-OC_2H_5$ | 0,71 |
| 121 | $-(CH_2)_2-OC_4H_9$ | 0,70 |
| 122 | $-(CH_2)_3-OCH_3$ | 0,70 |
| 123 | $-(CH_2)_3-OC_4H_9$ | 0,69 |
| 124 | $-(CH_2)_2-$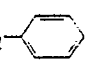 | 0,75 |
| 125 | $-(CH_2)_3-$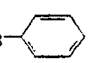 | 0,75 |
| 126 | -(CH2)2-O-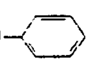 | 0,74 |
| 127 | $-(CH_2)_2-O-CH_2-$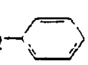 | 0,74 |
| 128 | $-(CH_2)_3-O-CH_2-$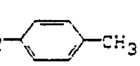 | 0,73 |
| 129 | $-(CH_2)_4-O-CH_2-$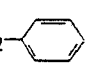 | 0,70 |
| 130 | $-(CH_2)_5-O-CH_2-$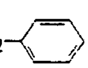 | 0,69 |

| | | |
|---|---|---|
| 131 | $-(CH_2)_6-O-CH_2-$ 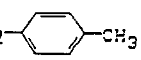 | 0,71 |
| 132 | $-(CH_2)_4-O-CH_2-CH=CH_2$ | 0,70 |
| 133 | $-CH_2-$ 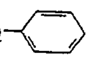 | 0,73 |
| 134 | $-CH_2-$ 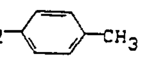 | 0,74 |
| 135 | $-CH_2-$ 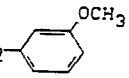 | 0,74 |

**Beispiel 136**

a) Aus einer Mischung von 160 g Phenol und 15 g trockenem Kaliumcarbonat destilliert man in Vakuum ca. 30 g Phenol ab und versetzt die zurückgebliebene Schmelze bei etwa 120°C mit 20 g 1,8-Diamino-4,5-di-(4-tosylamino-2,7-dibrom-anthrachinon. Man erhitzt das Gemisch, bis nach etwa 4 Std. das Ausgangsmaterial nahezu völlig umgesetzt und ein Gemisch entstanden ist, das hauptsächlich aus dem etwa röteren Monoumsetzungsprodukt und geringen Mengen von dem noch röteren Di-umsetzungsprodukt besteht (Chromatographie an Kieselgel mit einem Laufmittel aus 50 ccm Toluol und 1 ccm Methanol). Man verdünnt das Reaktionsgemisch bei etwa 70°C mit 200 ccm Methanol, saugt nach dem völligen Erkalten ab und wäscht die Kristalle mit Methanol und heißem Wasser und erhält nach dem Trocknen bei 60°C 6,3 g, entspr. 30 % d. Th., 1,8-Diamino-4,5-di-(4-tosylamino)-2-phenoxy-7-bromanthrachinon, das durch Umkristallisation aus Chlorbenzol in nahezu völlig reiner Form erhalten werden kann. Aus der durch das Waschmethanol verdünnten Mutterlauge kristallisieren nach einigem Stehen nochmals 4,3 g eines Substanzgemisches, das aber überwiegend aus dem Di-umsetzungsprodukt besteht.

b) 6 g des in Beispiel 136a hergestellten Zwischenprodukts werden in 150 ccm konz. Schwefelsäure bei max. 10°C eingetragen und so lange bei dieser Temperatur gerührt, bis nach etwa 1 Std. das Ausgangsmaterial vollkommen gespalten ist. Man gießt dann die Lösung auf 300 g Eis, saugt das ausgefallene Produkt ab, wäscht mit Wasser und trägt die Paste in 300 ccm 10-proz. Ammoniaklösung ein. Die erhaltene Farbstoffsuspension wird 30 Min. bei 90°C gerührt, heiß abgesaugt und der erhaltene Farbstoff neutral gewaschen und bei 60°C getrocknet. Man erhält 3,1 g 1,4,5,8-Tetraamino-2-phenoxy-7-brom-anthrachinon, entspr. 87 % Ausbeute, dessen Farbnuance auf Kieselgel nach der Colour Index Hue Indication Chart ein Blau mit der Indicator Number 15 ist.

c) Der in Beispiel 136b hergestellte Farbstoff besitzt in der in Beispiel 1c genannten Flüssigkristallmischung einen Ordnungsgrad S von 0,73. Ähnlich gute Ordnungsgrade findet man auch in anderen, z. B. den auf S. 10 und 11 aufgeführten Flüssigkristallmischungen.

**Beispiel 137**

a) In 100 ccm N-Methylpyrrolidon trägt man 15 g 1,8-Diamino-4,5-di-(4-tosylamino)-2,7-dibrom-anthrachinon, 11,2 g 3-Fluor-phenol und 2 g trockenes Kaliumcarbonat ein und erhitzt das Gemisch unter Rühren so lange auf 110°C, bis nach etwa 4 Stunden das Ausgangsmaterial nahezu vollständig umgesetzt ist (vgl. Beispiel 136a). Man arbeitet das Reaktionsgemisch wie in Beispiel 136a beschrieben auf und erhält 7,2 g 1,8-Diamino-4,5-di-(4-tosylamino)-2-(3-fluor-phenoxy)-7-brom-anthrachinon, entspr. 46 % d. Th.

b) 7 g des in Beispiel 137a hergestellten Zwischenproduktes trägt man bei max. 10°C in 200 ccm 90-proz. Schwefelsäure ein und rührt die entstandene Lösung so lange bei dieser Temperatur, bis nach etwa 1 Std. das eingesetzte Material völlig gespalten ist. Dann gießt man auf 800 g Eis, saugt ab und wäscht das Produkt mit wenig Wasser. Das trocken gesaugte Produkt wird dann in 200 ccm 10-proz. Ammoniaklösung eingetragen, 30 Min. bei 90°C gerührt, abgesaugt, neutral gewaschen und bei 60°C getrocknet. Man erhält 3,6 g, entspr. 86 % d. Th. 1,4,5,8-Tetraamino-2-(3-fluor-phenoxy)-7-brom-anthrachinon. Die Farbnuance auf Kieselgel nach Colour Index Hue Indication Chart ist ein Blau zwischen den Indicator Numbers 14 und 15.

c) Der in Beispiel 137b hergestellte Farbstoff besitzt in der in Beispiel 1c genannten Flüssigkristallmischung einen Ordnungsgrad S von 0,76. Ähnlich gute Ordnungsgrade findet man auch in anderen, z. B. den auf S. 10 und 11 aufgeführten Flüssigkristallmischungen.

**Beispiel 138**

a) Ein Gemisch aus 80 ccm N-Methylpyrrolidon, 41,6 g 4-Hydroxy-benzoesäure-n-pentylester, 2,8 g trockenem Kaliumcarbonat und 14,8 g 1,8-Diamino-4,5-di-(4-tosylamino)-2,7-dibrom-anthrachinon wird so lange auf 150°C erhitzt, bis nach etwa 15 bis 30 Min. das Ausgangsmaterial völlig umgesetzt ist (vgl. Beispiel 136a). Dann verdünnt man bei etwa 70°C mit 150 ccm Methanol und läßt vollkommen abkühlen. Die ausgefallenen Kristalle werden abgesaugt, mit Methanol und heißem Wasser gewaschen und bei 60°C getrocknet. Man erhält 4,4 g 1,8-Di-amino-4,5-di-(4-tosylamino)-2-(4-n-pentyloxy-carbonyl-phenoxy)-7-brom-anthrachinon, entspr. einer Ausbeute von 25 % d.Th.

b) 4 g des in Beispiel 138a hergestellten Farbstoffs trägt man bei max. 10°C in 100 ccm 90-proz. Schwefelsäure ein und rührt bei dieser Temperatur bis nach etwa 1 Std. völlige Spaltung des Einsatzmaterials beobachtet wird. Dann gießt man die Lösung auf 400 g Eis, saugt den Farbstoff ab, wäscht ihn mit wenig Wasser und trägt ihn in 400 ccm 10-proz. Ammoniaklösung ein. Man erhitzt die Suspension 30 Min. auf 90°C, saugt ab und wäscht den Farbstoff neutral und trocknet ihn bei 60°C. Man erhält 2,1 g 1,4,5,8-Tetraamino-2-(4-n-pentyloxy-carbonyl-phenoxy)-7-brom-anthrachinon, entspr. 81 % d. Th.. Die Farbnuance auf Kieselgel nach Colour Index Hue Indication Chart ist ein Blau mit der Indicator Number 15.

c) Der in Beispiel 138b hergestellte Farbstoff besitzt in der in Beispiel 1c genannten Flüssigkristallmischung einen Ordnungsgrad S von 0,78. Ähnlich gute Ordnungsgrade findet man auch in anderen, z. B. den auf S. 10 und 11 genannten Flüssigkristallmischungen.

**Beispiele 139 bis 170**

Verwendet man in den Beispielen 136a bis 138a anstelle der dort genannten Phenole andere substituierte Phenole, so erhält man nach Spaltung gemäß den Beispielen 136b bis 138b die analogen, in Tabelle 3 angegebenen Farbstoffe, die in der in Beispiel 1c genannten Flüssigkristallmischung die in der Tabelle 3 angegebenen Ordnungsgrade S besitzen und deren Farbnuance auf Kieselgel nach der Colour Index Hue Indication Chart ein Blau zwischen den Indicator Numbers 14 und 15 ist.

**Tabelle 3**

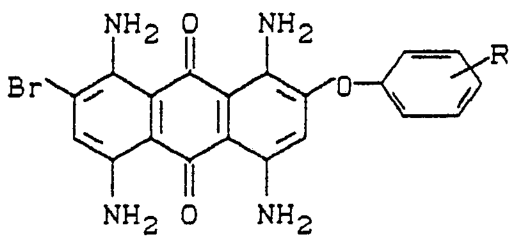

| Beispiel | R | S |
|---|---|---|
| 139 | 2-Cl | 0,76 |
| 140 | 3-Cl | 0,78 |
| 141 | 4-Cl | 0,77 |
| 142 | 3-$CH_3$ | 0,78 |
| 143 | 4-$CH_3$ | 0,79 |
| 144 | 4-$C_2H_5$ | 0,78 |
| 145 | 2-$OCH_3$ | 0,78 |
| 146 | 4-$OCH_3$ | 0,79 |
| 147 | 3-$SCH_3$ | 0,76 |
| 148 | 4-$SCH_3$ | 0,77 |
| 149 | 4- 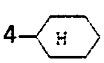 | 0,76 |
| 150 | 3- 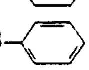 | 0,80 |
| 151 | 4- 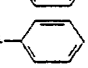 | 0,79 |
| 152 | 4-$COOCH_3$ | 0,77 |

| | | |
|---|---|---|
| 153 | 3-$COOC_2H_5$ | 0,77 |
| 154 | 4-$COOC_2H_5$ | 0,77 |
| 155 | 4-$COOC_3H_7$ | 0,76 |
| 156 | 4-$COOC_3H_7$ | 0,77 |
| 157 | 3-$COOC_4H_9$ | 0,76 |
| 158 | 4-$COOC_4H_9$ | 0,78 |
| 159 | 3-$COOC_5H_{11}$ | 0,78 |
| 160 | 3-$COOC_7H_{13}$ | 0,78 |
| 161 | 4-$COOC_7H_{13}$ | 0,75 |
| 162 | 4-$SO_2$-O- 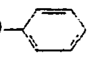 | 0,72 |
| 163 | 3-$CF_3$ | 0.76 |
| 164 | 4-$CF_3$ | 0,76 |
| 165 | 3-$OCF_3$ | 0,77 |
| 166 | 3-CN | 0.78 |
| 167 | 2,4-di-Cl | 0.76 |
| 168 | 3,4-di-Cl | 0,75 |
| 169 | 3,4-di-$CH_3$ | 0,76 |
| 170 | 2,5-di-$CH_3$ | 0,74 |

**Beispiel 171**

a) Ein Gemisch aus 7,4 g n-Butanol, 11,3 g ε-Caprolactam, 9,4 g 1,8-Diamino-4,5-di-(4-tosylamino)-2-phenoxy-7-brom-anthrachinon (Herstellung s. Beispiel 136a) und 1,3 g trockenem Kaliumcarbonat erhitzt man so lange unter Rühren und Überleiten von Stickstoff auf 135 bis 140°C, bis das Ausgangsmaterial umgesetzt ist. Dann verdünnt man das Reaktionsgemisch bei ca. 70°C mit 25 ccm Methanol, läßt völlig abkühlen und saugt die ausgefallenen Kristalle ab. Man wäscht den Farbstoff mit Methanol und heißem Wasser und trocknet ihn bei ca. 60°C.

Die Ausbeute an 1,8-Diamino-4,5-di-(tosylamino)-2-n-butoxy-7-brom-anthrachinon beträgt 7,1 g, entspr. 77 % d. Th.

b) 6 g des in Beispiel 171a hergestellten Zwischenprodukts werden in 150 ccm konz. Schwefelsäure bei max. 10°C eingetragen und so lange bei dieser Temperatur gerührt, bis nach etwa 1 Std. das Ausgangsmaterial völlig gespalten ist. Man gießt dann die Lösung auf 300 g Eis, saugt das ausgefallene Produkt ab, wäscht es mit Wasser und trägt die erhaltene Feuchtpaste in ca. 300 ccm 10-proz. Ammonmiaklösung ein. Die erhaltene Farbstoffsuspension wird bei 30 Min. bei 90°C gerührt, heiß abgesaugt, der erhaltene Farbstoff neutral gewaschen und bei 60°C getrocknet. Man erhält 3,1 g 1,4,5,8-Tetraamino-2-n-butoxy-7-brom-anthrachinon, entspr. 89 % d. Th. Auf Kieselgel zeigt der Farbstoff eine blaue Nuance der Indicator Number 14 (Colour Index Hue Indication Chart).

c) Der in Beispiel 171b hergestellte Farbstoff besitzt in der in Beispiel 1c genannten Flüssigkristallmischung einen Ordnungsgrad S von 0,75.

Ähnlich gute Ordnungsgrade findet man auch in anderen, z. B. den auf S. 10 und 11 genannten Flüssigkristallmischungen.

**Beispiel 172 bis 180**

Verwendet man in Beispiel 171a anstelle des dort genannten n-Butanols andere (substituierte) Alkohole, so erhält man nach Spaltung gemäß Beispiel 171b die analogen, in Tabelle 4 genannten Farbstoffe, die in der in Beispiel 1c genannten Flüssigkristallmischung die in der Tabelle 4 angegebenen Ordnungsgrade S besitzen und deren Farbnuance auf Kieselgel nach der Colour Index Hue Indication Chart ein Blau zwischen den Indicator Numbers 14 und 15 ist.

**Tabelle 4**

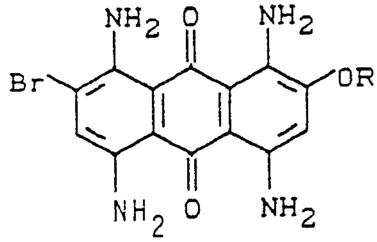

| Beispiel | R | S |
|---|---|---|
| 172 | $-CH_3$ | 0,73 |
| 173 | $-C_2H_5$ | 0,72 |
| 174 | n-$C_3H_7$ | 0,74 |
| 175 | -n-$C_5H_{11}$ | 0,75 |
| 176 | $-(CH_2)_2-OCH_3$ | 0,72 |
| 177 | $-(CH_2)_2)-$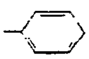 | 0.75 |
| 178 | $-(CH_2)_2-O-$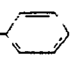 | 0,74 |
| 179 | $-(CH_2)_2-O-CH_2-$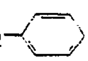 | 0,73 |
| 180 | $-CH_2-$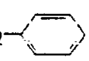 | 0,73 |

**Beispiele 181 - 182**

a) Setzt man 1,5-Diamino-4,8-di-(4-tosylamino)-2,7-dibrom-anthrachinon analog der Vorschrift der US-PS-2 992 240, Bsp. 13 mit Natrium-hydrogensulfid um, so erhält man 1,5-Diamino-4,8-di-(4-tosylamino)-2,7-dimercapto-anthrachinon.

b) Alkyliert man das vorstehende Dimercaptan mit den entsprechenden Alkylierungsmitteln, gelangt man zu 1,5-Diamino-4,8-di-(4-tosylamino)-2,7-di-butylmercapto-anthrachinon bzw. 1,5-Diamino-4,8-di-(4-tosylamino)-2,7-di-benzylmercapto-anthrachinon.

c) Spaltet man die in b) erhaltenen Reaktionsprodukte mit 90-proz. Schwefelsäure analog Beispiel 1b, so erhält man 1,4,5,8-Tetraamino-2,7-di-butylmercapto-anthrachinon bzw. 1,4,5,8-Tetraamino-2,7-di-benzylmercapto-anthrachinon.

d) Die Verbindungen der Beispiele 181b und 182b können auch durch Umsetzung von 1,5-Diamino-4,8-di-(4-tosylamino)-2,6-dibromanthrachinon mit den entsprechenden Mercaptanen erhalten werden.

e) 1,4,5,8-Tetraamino-2,7-di-butylmercapto-anthrachinon besitzt einen Ordnungsgrad S von 0,70; 1,4,5,8-Tetraamino-2,7-dibenzylmercapto-anthrachinon besitzt einen Ordnungsgrad S von 0,73.

**Beispiel 183**

Analog zu den Beispielen 181 - 182 läßt sich

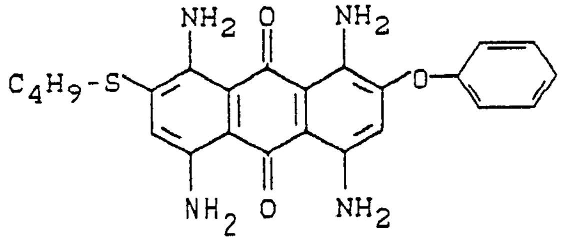

herstellen, das einen Ordnungsgrad S von 0,74 aufweist.

**Patentansprüche**

1. Flüssigkristallines Material enthaltend einen Farbstoff der Formel:

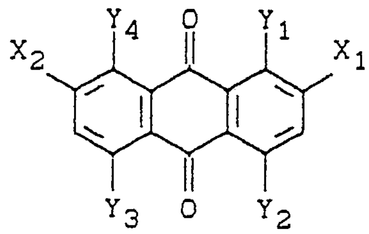

(I)

in der

$Y_1$, $Y_2$, $Y_3$, $Y_4$ Amino, Alkylamino, Arylamino, Cycloalkylamino, Aralkylamino bezeichnen, wobei die Kohlenwasserstoffreste substituiert sein können, und

$X_1$, $X_2$ Halogen, einen gegebenenfalls substituierten heterocyclischen Rest, $-SR_1$ oder $-OR_1$ bezeichnen, wobei

$R_1$ für gegebenenfalls substituiertes Alkyl, wobei die Alkylkette durch ein O-Atom oder mehrere nicht nachbarständige O-Atome unterbrochen sein kann, gegebenenfalls substituiertes Aryl, gegebenenfalls substituiertes Cycloalkyl, gegebenenfalls substituiertes Aralkyl oder einen gegebenenfalls substituierten heterocyclischen Rest steht.

2. Flüssigkristallines Material gemäß Anspruch 1 enthaltend einen Farbstoff der Formel:

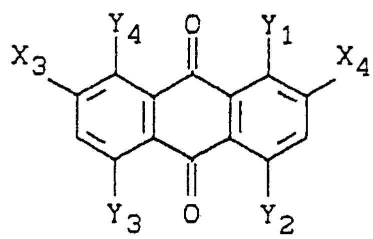

in der

$X_3$, $X_4$ Halogen, einen gegebenenfalls substituierten heterocyclischen Rest, $-OR_2$ oder $-SR_2$ bezeichnen, wobei

$R_2$ gegebenenfalls substituiertes Aryl oder einen gegebenenfalls substituierten heterocyclischen Rest bezeichnet.

3. Flüssigkristallines Material gemäß Anspruch 2 enthaltend einen Farbstoff der Formel:

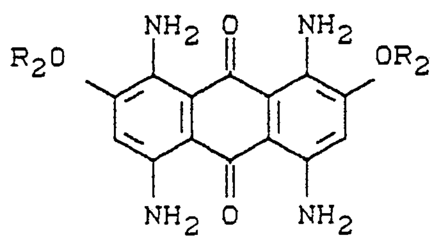

4. Flüssigkristallines Material gemäß Anspruch 1 enthaltend einen Farbstoff der Formel:

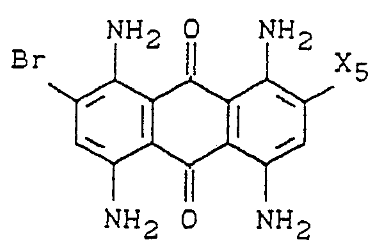

in der

$X_5$ $-OR_1$ oder $-SR_1$ bezeichnet.

5. Flüssigkristallines Material enthaltend einen Farbstoff der Formel:

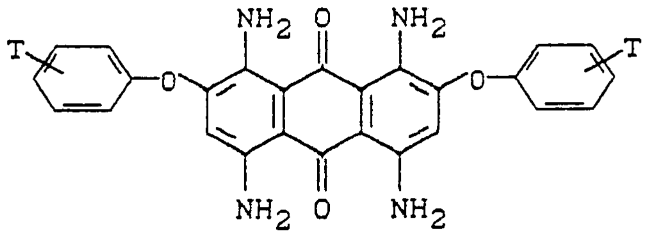

in der

T Wasserstoff, Alkyl, wobei die Alkylkette durch 1 - 3 nicht nachbarständige O-Atome unterbrochen sein kann, vorzugsweise $C_1$-$C_6$-Alkyl, Alkoxy, wobei die C-Kette des Alkoxyrestes durch 1 - 3 nicht nachbarständige O-Atome unterbrochen sein kann, vorzugsweise $C_1$-$C_6$-Alkoxy, Halogen, vorzugsweise Chlor, Brom und insbesondere Fluor, $-CF_3$, -CN, Alkylthio, insbesondere $C_1$-$C_6$-Alkylthio, Arylthio, insbesondere Phenylthio, $COOR_1$, insbesondere ($C_1$-$C_8$-Alkoxy)-carbonyl, Cyclohexyloxycarbonyl, Phenoxycarbonyl, Benzyloxycarbonyl,

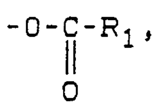

insbesondere ($C_1$-$C_8$-Alkyl)-carbonyloxy, Cyclohexylcarbonyloxy und Benzoyloxy bezeichnet und

$R_1$ die in Anspruch 1 angegebene Bedeutung hat.

6. Flüssigkristallines Material enthaltend einen Farbstoff der Formel:

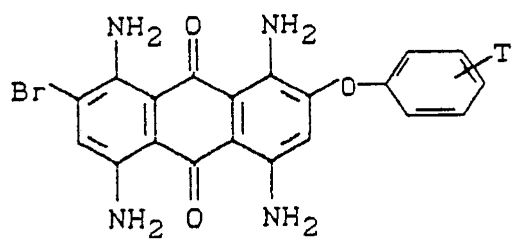

in der T die in Anspruch 5 angegebene Bedeutung hat.

7. Flüssigkristallines Material enthaltend einen Farbstoff der Formel:

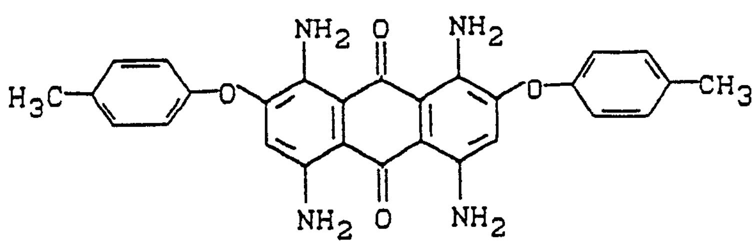

8. Flüssigkristallines Material gemäß den Ansprüchen 1 - 7 enthaltend etwa 0,01 bis etwa 30 Gew.-% Farbstoff.

9. Flüssigkristallines Material gemäß den Ansprüchen 1 - 7 enthaltend etwa 0,1 bis etwa 10 Gew.-% Farbstoff.

## Claims

1. Liquid-crystalline material containing a dyestuff of the formula:

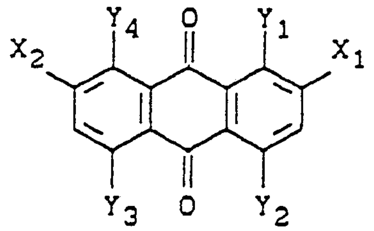

(I)

in which

$Y_1$, $Y_2$, $Y_3$, $Y_4$ designate amino, alkylamino, arylamino, cycloalkylamino, aralkylamino, it being possible for the hydrocarbon radicals to be substituted, and

$X_1$, $X_2$ designate halogen, an optionally substituted heterocyclic radical, $-SR_1$ or $-OR_1$, with

$R_1$ representing optionally substituted alkyl, it being possible for the alkyl chain to be interrupted by an O atom or several non-adjacent O atoms, optionally substituted aryl, optionally substituted cycloalkyl, optionally substituted aralkyl or an optionally substituted heterocyclic radical.

2. Liquid-crystalline material according to Claim 1, containing a dyestuff of the formula:

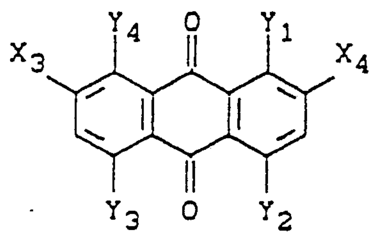

in which

$X_3$, $X_4$ designate halogen, an optionally substituted heterocyclic radical, $-OR_2$ or $-SR_2$, with

$R_2$ designating optionally substituted aryl or an optionally substituted heterocyclic radical.

3. Liquid-crystalline material according to Claim 2, containing a dyestuff of the formula:

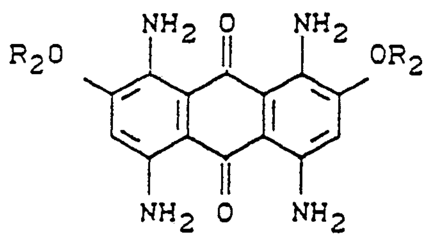

4. Liquid-crystalline material according to Claim 1, containing a dyestuff of the formula:

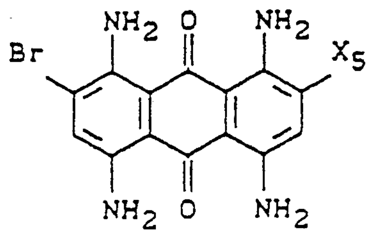

in which

$X_5$ designates $-OR_1$ or $-SR_1$.

5. Liquid-crystalline material containing a dyestuff of the formula:

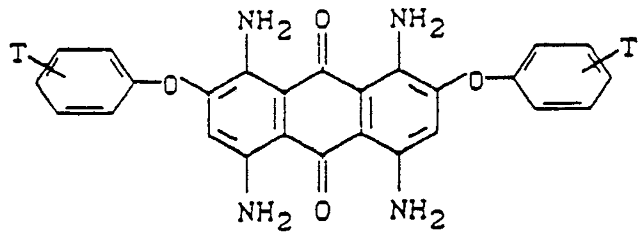

in which
T designates hydrogen, alkyl, it being possible for the alkyl chain to be interrupted by 1 - 3 non-adjacent O atoms, preferably $C_1$-$C_6$ alkyl, alkoxy, it being possible for the C chain of the alkoxy radical to be interrupted by 1 - 3 non-adjacent O atoms, preferably $C_1$-$C_6$ alkoxy, halogen, preferably chlorine, bromine and, in particular, fluorine, -$CF_3$, -CN, alkylthio, in particular $C_1$-$C_6$ alkylthio, arylthio, in particular phenylthio, $COOR_1$, in particular ($C_1$-$C_8$-alkoxy)-carbonyl, cyclohexyloxycarbonyl, phenoxycarbonyl, benzyloxycarbonyl,

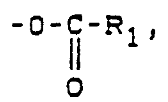

in particular ($C_1$-$C_8$-alkyl)-carbonyloxy, cyclohexylcarbonyloxy and benzoyloxy, and $R_1$ has the meaning indicated in Claim 1.

6. Liquid-crystalline material containing a dyestuff of the formula:

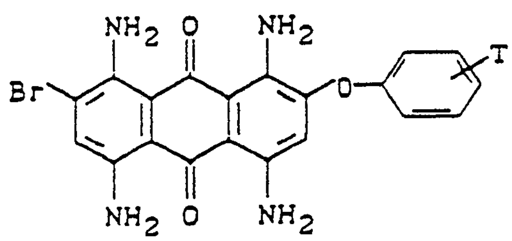

in which
T has the meaning indicated in Claim 5.

7. Liquid-crystalline material containing a dyestuff of the formula:

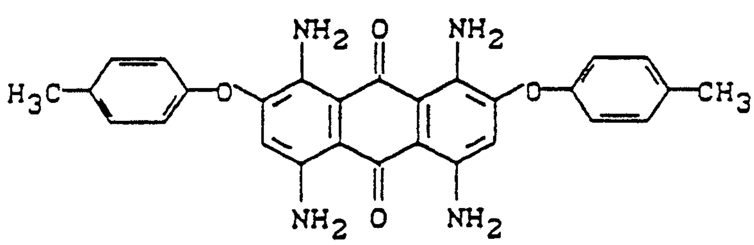

8. Liquid-crystalline material according to Claims 1 - 7, containing about 0.01 to about 30 % by weight of dyestuff.

9. Liquid-crystalline material according to Claims 1 - 7, containing about 0.1 to about 10 % by weight of dyestuff.

## Revendications

1. Matière à cristal liquide contenant un colorant de formule:

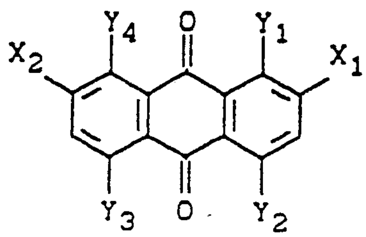

(I)

dans laquelle

$Y_1$, $Y_2$, $Y_3$, $Y_4$ désignent des groupes amino, alkylamino, arylamino, cycloalkylamino, aralkylamino, dont les restes hydrocarbonés peuvent être substitués, et

$X_1$, $X_2$ représentent un halogène, un reste hétérocyclique éventuellement substitué, $-SR_1$ ou $-OR_1$, où

$R_1$ désigne un reste alkyle éventuellement substitué, dont la chaîne alkylique peut être interrompue par un atome d'oxygène ou par plusieurs atomes d'oxygène n'occupant pas de positions voisines, un reste aryle éventuellement substitué, un reste cycloalkyle éventuellement substitué, un reste aralkyle éventuellement substitué ou un reste hétérocyclique éventuellement substitué.

2. Matière à cristal liquide suivant la revendication 1, contenant un colorant de formule:

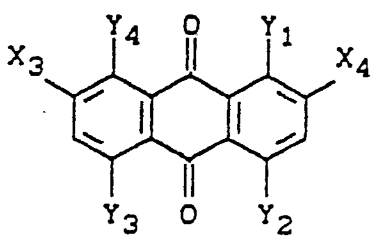

dans laquelle

$X_3$, $X_4$ représentent un halogène, un reste hétérocyclique éventuellement substitué, $-OR_2$ ou $-SR_2$, où

$R_2$ est un reste aryle éventuellement substitué ou un reste hétérocyclique éventuellement substitué.

3. Matière à cristal liquide suivant la revendication 2, contenant un colorant de formule:

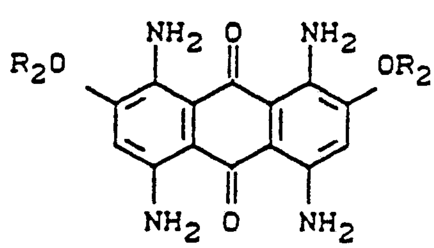

4. Matière à cristal liquide suivant la revendication 1, contenant un colorant de formule:

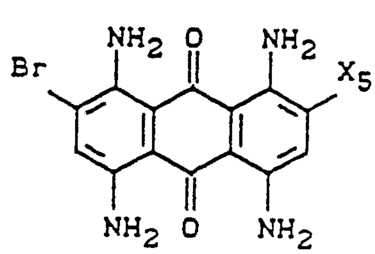

dans laquelle
$X_5$ est un groupe $-OR_1$ ou $-SR_1$.

5. Matière à cristal liquide contenant un colorant de formule:

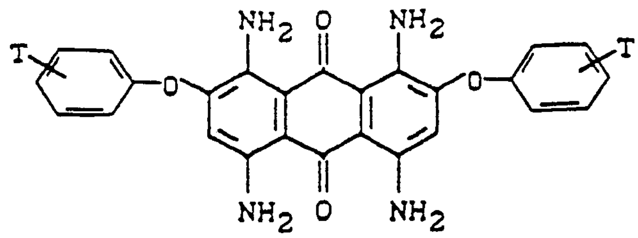

dans laquelle
T est l'hydrogène, un reste alkyle dont la chaîne alkylique peut être interrompue par 1 à 3 atomes d'oxygène n'occupant pas de positions voisines, de préférence un reste alkyle en $C_1$ à $C_6$, un reste alkoxy, dont la chaîne carbonée peut être interrompue par 1 à 3 atomes d'oxygène n'occupant pas de positions voisines, de préférence un reste alkoxy en $C_1$ à $C_6$, un halogène, de préférence le chlore, le brome et notamment le fluor, un groupe $-CF_3$, -CN, alkylthio, notamment alkylthio en $C_1$ à $C_6$, arylthio, notamment phénylthio, un groupe $COOR_1$, notamment (alkoxy en $C_1$ à $C_8$)-carbonyle, cyclohexyloxycarbonyle, phénoxycarbonyle, benzyloxycarbonyle,

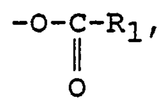

notamment (alkyle en $C_1$ à $C_8$)-carbonyloxy, cyclohexylcarbonyloxy et benzoyloxy et
$R_1$ a la définition indiquée dans la revendication 1.

6. Matière à cristal liquide contenant un colorant de formule:

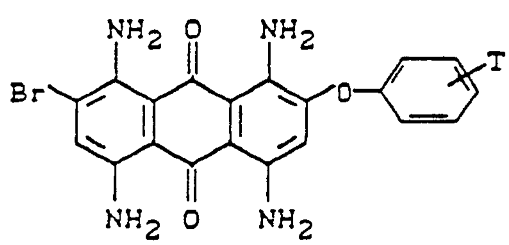

dans laquelle T a la définition indiquée dans la revendication 5.

7. Matière à cristal liquide contenant un colorant de formule:

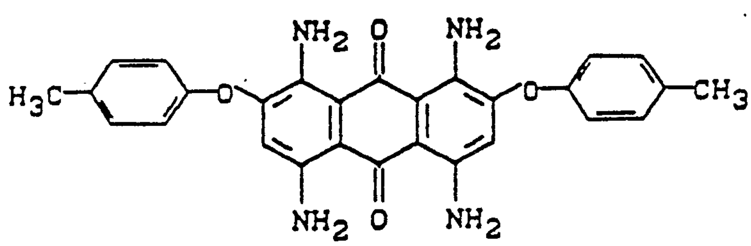

8. Matière à cristal liquide suivant les revendications 1 à 7, contenant environ 0,01 à environ 30 % en poids de colorant.

9. Matière à cristal liquide suivant les revendications 1 à 7, contenant environ 0,1 à environ 10 % en poids de colorant.